(19) Europäisches Patentamt
European Patent Office
Office européen des brevets

(11) **EP 3 249 618 B1**

(12) **EUROPEAN PATENT SPECIFICATION**

(45) Date of publication and mention
of the grant of the patent:
**05.08.2020 Bulletin 2020/32**

(51) Int Cl.:
**G07D 7/20** *(2016.01)* **G07D 7/1205** *(2016.01)*
**G07D 7/202** *(2016.01)*

(21) Application number: **15878501.4**

(22) Date of filing: **29.06.2015**

(86) International application number:
**PCT/CN2015/082615**

(87) International publication number:
**WO 2016/115829 (28.07.2016 Gazette 2016/30)**

(54) **BANKNOTE CLASSIFICATION AND IDENTIFICATION METHOD AND DEVICE BASED ON LAB COLOR SPACE**

BANKNOTENKLASSIFIZIERUNGS- UND -IDENTIFIZIERUNGSVERFAHREN UND VORRICHTUNG BASIEREND AUF LABORFARBRAUM

PROCÉDÉ ET DISPOSITIF DE CLASSIFICATION ET D'IDENTIFICATION DE BILLETS DE BANQUE FAISANT APPEL À L'ESPACE COLORIMÉTRIQUE CIELAB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2015 CN 201510033336**

(43) Date of publication of application:
**29.11.2017 Bulletin 2017/48**

(73) Proprietor: **GRG Banking Equipment Co., Ltd.**
**Guangzhou, Guangdong 510663 (CN)**

(72) Inventors:
• **CHEN, Jian**
**Guangzhou**
**Guangdong 510663 (CN)**
• **CUI, Shanling**
**Guangzhou**
**Guangdong 510663 (CN)**
• **WANG, Qianwen**
**Guangzhou**
**Guangdong 510663 (CN)**
• **XU, Jing**
**Guangzhou**
**Guangdong 510663 (CN)**

(74) Representative: **LKGLOBAL**
**Lorenz & Kopf PartG mbB Patentanwälte**
**Brienner Straße 11**
**80333 München (DE)**

(56) References cited:
WO-A1-2011/082793      CN-A- 102 063 758
CN-A- 102 750 771      CN-A- 104 036 290
CN-A- 104 167 045      CN-A- 104 537 756
KR-A- 20070 011 866      KR-A- 20080 104 804

• **ADITI KAPOOR ET AL: "Salient object detection using a fuzzy theoretic approach", COMPUTER VISION, GRAPHICS AND IMAGE PROCESSING, ACM, 2 PENN PLAZA, SUITE 701 NEW YORK NY 10121-0701 USA, 16 December 2012 (2012-12-16), pages 1-8, XP058030154, DOI: 10.1145/2425333.2425342 ISBN: 978-1-4503-1660-6**

**Description**

The present application claims the priority to Chinese Patent Application No.201510033336.2, titled "BANKNOTE CLASSIFICATION AND RECOGNITION METHOD AND DEVICE BASED ON LAB COLOR SPACE", filed on January 22, 2015 with the State Intellectual Property Office of the People's Republic of China.

**TECHNICAL FIELD**

The present disclosure relates to the field of classification and recognition of a banknote denomination, and in particular to a banknote classification and recognition method and device based on a Lab color space.

**BACKGROUND**

With the continuous prosperity of the domestic market economy, the amount of banknotes in circulation is becoming larger and larger. Financial institutions require that financial equipment must support recognition of different denominations of Renminbi. A Lab color space is a color space close to human vision. "L" (Luminosity) represents brightness, and each of "a" and "b" represents a dimension between two opposite colors. "L" ranges from 0 to 100, which represents black to pure white, "a" represents a color between red and green, which ranges from +127 to -128, and "b" represents a color between blue and yellow, which ranges from +127 to -128, where a positive value represents a warm color, and a negative values represents a cool color. The Lab color space has a wide color gamut, not only including the whole color gamut of RGB and CMYK, but also can express colors which cannot be expressed by RGB and CMYK. All the colors which can be perceived by human eyes can be expressed through a Lab model. In addition, the Lab color model can also overcome the disadvantage of uneven color distribution of a RGB color model because of too many transitional colors between blue and green and a lack of yellow and other colors between green and red in the RGB model.

At present, the core technology of financial equipment is based on real-time banknote image processing and image recognition. One of common methods is to recognize using geometrical features (length and width) of images of banknotes of different denominations. However, since images of banknotes are obtained through a high-speed collection device, distortion and deformation are inevitable, which leads to instability of the geometric features, and results in a decrease in the recognition rate. Another method is to recognize denominations using a gray difference of different regions in a single channel gray image. However, the difference of gray features of some different denominations is not significant, and a main feature region for recognition may be stained. Therefore, there is a risk of misrecognizing banknotes of different denominations or different currency types.

The conventional technology has a drawback that a conventional recognition device can only obtain a single channel grayscale image, which cannot effectively recognize the color of a banknote, resulting in a low denomination recognition rate. WO 2011/082793 A1 describes a method for testing value documents of the same specified type. Characteristic data describing specified characteristics of the value document is determined, and a class of the value document is determined from a number n of classes. Some of the characteristic data or the processing data generated from the characteristic data are transformed, and the transformation depends on the determined class in order to compensate for a dependence of the characteristic or processing data on the determined class. H1 also mentions a value-value device may transform property values into CIE-Lab color space, without teaching how to transform and how to use the CIE-Lab values.

**SUMMARY**

A banknote classification and recognition method and device based on a Lab color space are provided according to embodiment of the present disclosure, to improve the denomination recognition rate.

A banknote classification and recognition method based on a Lab color space, applied to financial equipment, is provided according to the embodiment of the present disclosure according to claim 1. The technical solutions include:

obtaining an RGB image of a banknote to be detected;

calculating gray values Gray R, Gray G and Gray B of the RGB image in red (R), green (G) and blue (B) wavebands;

converting the gray values Gray R, Gray G and Gray B into gray values Gray a and Gray b in the Lab color space; and

substituting a product of Gray a and Gray b and a difference between the absolute value of Gray a and the absolute value of Gray b into preset formulas to recognize a denomination of the banknote to be detected; and recognizing a denomination of the banknote to be detected based on results obtained from substituting a product of Gray a and Gray b and a difference between the absolute value of Gray a and the absolute value of Gray b into preset formulas.

Preferably, the substituting the product of Gray a and Gray b and the difference between the absolute value of Gray a and the absolute value of Gray b into the preset formulas to obtain the denomination of the banknote to be detected includes:

determining the banknote to be detected as 100 Yuan, in a case that the product of Gray a and Gray b is greater than zero, and the difference between the absolute value of Gray a and the absolute value of Gray b is greater than 20;

determining the banknote to be detected as 20 Yuan, in a case that the product of Gray a and Gray b is greater than zero, and the difference between the absolute value of Gray a and the absolute value of Gray b is less than 5;

determining the banknote to be detected as 50 Yuan, in a case that the product of Gray a and Gray b is less than zero, and the difference between the absolute value of Gray a and the absolute value of Gray b is greater than 10; and

determining the banknote to be detected as 10 Yuan, in a case that Gray a is less than zero, and the difference between the absolute value of Gray a and the absolute value of Gray b is less than 10.

Preferably, the obtaining the RGB image of the banknote to be detected includes: extracting a complete region of the banknote to be detected; and obtaining the RGB image of the complete region via a multi-spectral recognition device.

Preferably, the calculating the gray values Gray R, Gray G and Gray B of the RGB image in the red (R), green (G) and blue (B) wavebands includes: selecting a region of a head portrait of Mao Zedong in the RGB image as a target region; and calculating the gray values Gray R, Gray G and Gray B in the red (R), green (G) and blue (B) wavebands based on the target region.

The converting Gray R, Gray G and Gray B into the gray values Gray a and Gray b in the Lab color space includes:

substituting Gray R, Gray G and Gray B into conversion formulas to obtain Gray a and Gray b, where the conversion formulas are:

$$\text{Gray a} = 1.4749 * (0.2213 * \text{Gray R} - 0.3390 * \text{Gray G} + 0.1177 * \text{Gray B}) + 128,$$

and

$$\text{Gray b} = 0.6245 * (0.1949 * \text{Gray R} + 0.6057 * \text{Gray G} - 0.8006 * \text{Gray B}) + 128.$$

A banknote classification and recognition device based on a Lab color space, applied to financial equipment, is provided according to the embodiment of the present disclosure. The technical solutions include:

an obtaining module, configured to obtain an RGB image of a banknote to be detected;
a processing module, configured to calculate gray values Gray R, Gray G and Gray B of the RGB image obtained by the obtaining module in red (R), green (G) and blue (B) wavebands;
a converting module, configured to convert Gray R, Gray G and Gray B calculated by the processing module into gray values Gray a and Gray b in the Lab color space; and
a determining module, configured to substitute a product of Gray a and Gray b and a difference between the absolute value of Gray a and the absolute value of Gray b into preset formulas to recognize a denomination of the banknote to be detected, and recognize a denomination of the banknote to be detected based on results obtained from substituting a product of Gray a and Gray b and a difference between the absolute value of Gray a and the absolute value of Gray b into preset formulas.

Preferably, the determining module is configured to:

determine the banknote to be detected as 100 Yuan, in a case that the product of Gray a and Gray b is greater than zero, and the difference between the absolute value of Gray a and the absolute value of Gray b is greater than 20;
determine the banknote to be detected as 20 Yuan, in a case that the product of Gray a and Gray b is greater than zero, and the difference between the absolute value of Gray a and the absolute value of Gray b is less than 5;
determine the banknote to be detected as 50 Yuan, in a case that the product of Gray a and Gray b is less than zero, and the difference between the absolute value of Gray a and the absolute value of Gray b is greater than 10; and determine the banknote to be detected as 10 Yuan, in a case that Gray a is less than zero, and the difference between the absolute value of Gray a and the absolute value of Gray b is less than 10.

Preferably, the obtaining module is configured to obtain the RGB image of a complete region of the banknote to be detected via a multi-spectral recognition device.

Preferably, the processing module is configured to extract a region of a head portrait of Mao Zedong in the RGB image as a target region; and calculate the gray values Gray R, Gray G and Gray B in the red (R), green (G) and blue (B) wavebands based on the target region.

The converting module is configured to convert the gray values Gray R, Gray G and Gray B into the gray values Gray a and Gray b in the Lab color space according to conversion formulas of

$$Gray\ a = 1.4749 * (0.2213 * Gray\ R - 0.3390 * Gray\ G + 0.1177 * Gray\ B) + 128,$$

and

$$Gray\ b = 0.6245 * (0.1949 * Gray\ R + 0.6057 * Gray\ G - 0.8006 * Gray\ B) + 128$$

The embodiment of the present disclosure has Z the following beneficial effects. On the basis that the difference among colors of banknotes to be detected of different denominations is large, the RGB image of a banknote to be detected is obtained. Gray values Gray R, Gray G and Gray B of the RGB image in red (R), green (G) and blue (B) wavebands are calculated, and Gray R, Gray G and Gray B are converted into gray values Gray a and Gray b in the Lab color space. The product of Gray a and Gray b and the difference between the absolute value of Gray a and the absolute value of Gray b are substituted into preset formulas to effectively recognize different denominations of banknotes, improving the denomination recognition rate.

**BRIEF DESCRIPTION OF THE DRAWINGS**

To illustrate technical solution according to embodiment of the present disclosure or in the conventional technologies more clearly, drawings to be used in the descriptions of the conventional technologies or the embodiment are described briefly hereinafter. Apparently, the drawings described hereinafter are only for some examples of the present disclosure, and other drawings may be obtained by those skilled in the art based on those drawings without creative efforts.

Figure 1 is a schematic flow chart of a banknote classification and recognition method based on a Lab color space according to the embodiment of the present disclosure;

Figure 2 is a schematic flow chart of a banknote classification and recognition method based on a Lab color space according to another example of the present disclosure; and

Figure 3 is a schematic structural diagram of a banknote classification and recognition device based on a Lab color space according to the embodiment of the present disclosure.

**DETAILED DESCRIPTION OF THE EMBODIMENTS**

A banknote classification and recognition method and device based on a Lab color space are provided according to embodiment of the present disclosure, to improve the denomination recognition rate.

Technical solution of the embodiment of the present disclosure is illustrated clearly and completely in conjunction with the drawings of the embodiment of the present disclosure.

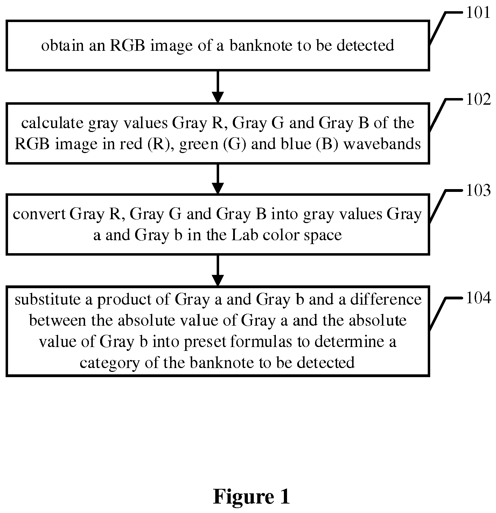

Reference is made to Figure 1. A banknote classification and recognition method based on a Lab color space is provided according to the embodiment of the present disclosure. The method includes steps 101 to 104.

In step 101, an RGB image of a banknote to be detected is obtained.

In the embodiment, the RGB image of the banknote to be detected is obtained.

In step 102, gray values Gray R, Gray G and Gray B of the RGB image in red (R), green (G) and blue (B) wavebands are calculated.

In the embodiment, the gray values Gray R, Gray G and Gray B of the obtained RGB image in red (R), green (G) and blue (B) wavebands are calculated.

In step 103, Gray R, Gray G and Gray B are converted into gray values Gray a and Gray b in the Lab color space.

In the embodiment, Gray R, Gray G and Gray B are converted into the gray values Gray a and Gray b in the Lab color space according to formulas. The Lab color space is composed of a luminosity component L and two chrominance components. The two chrominance components are respectively component "a" ranging from green to red and component "b" ranging from blue to yellow.

In step 104, a product of Gray a and Gray b and a difference between the absolute value of Gray a and the absolute value of Gray b are substituted into preset formulas to determine a category of the banknote to be detected.

In the embodiment, the product of Gray a and Gray b and the difference between the absolute value of Gray a and the absolute value of Gray b are substituted into the preset formula to obtain the category of the banknote to be detected.

In the embodiment, on the basis that the difference among colors of banknotes of different denominations is large, the RGB image of a banknote to be detected is obtained. Gray values Gray R, Gray G and Gray B of the RGB image in red (R), green (G) and blue (B)wavebands are calculated, and Gray R, Gray G and Gray B are converted into gray values Gray a and Gray b in the Lab color space. The product of Gray a and Gray b and the difference between the absolute value of Gray a and the absolute value of Gray b are substituted into preset formulas to effectively recognize different denominations of banknotes, thereby improving the denomination recognition rate.

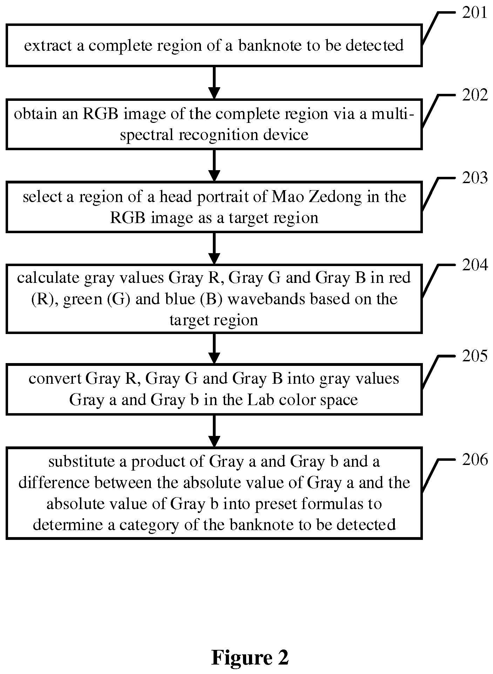

Reference is made to Figure 2. A banknote classification and recognition method based on a Lab color space is provided according to another example of the present disclosure. The method includes steps 201 to 206.

In step 201, a complete region of a banknote to be detected is extracted.

In the embodiment, the complete banknote region may be recognized and obtained by using an edge detection algorithm.

In step 202, an RGB image of the complete region is obtained via a multi-spectral recognition device.

In the embodiment, an image of the complete region of the banknote to be detected in the RGB spectrums is obtained via the multi-spectral recognition device.

In step 203, a region of a head portrait of Mao Zedong in the RGB image is selected as a target region.

In the embodiment, recognition is performed mainly on banknotes of four denominations in the fifth series of Renminbi, namely banknotes of 10 Yuan, 20 Yuan, 50 Yuan, and 100 Yuan. As an image feature perceived by human eyes, a banknote of 100 Yuan Renminbi appears in red, a banknote of 50 Yuan Renminbi appears in green, a banknote of 20 Yuan Renminbi appears in nearly yellow, and a pattern feature of 10 Yuan Renminbi appears in nearly blue. The region of the head portrait of Mao Zedong, in which banknote color information is the most abundant, is determined as the target region.

In step 204, gray values Gray R, Gray G and Gray B in red (R), green (G) and blue (B) wavebands are calculated based on the target region.

In the embodiment, the gray values Gray R, Gray G and Gray B in the red (R), green (G) and blue (B) wavebands are calculated based on the determined target region.

In step 205, Gray R, Gray G and Gray B are converted into gray values Gray a and Gray b in the Lab color space.

In the embodiment, Gray R, Gray G and Gray B are converted into the gray values Gray a and Gray b in the Lab color space according to conversion formulas:

$$\text{Gray a} = 1.4749 * (0.2213 * \text{Gray R} - 0.3390 * \text{Gray G} + 0.1177 * \text{Gray B}) + 128;$$

and

$$\text{Gray b} = 0.6245 * (0.1949 * \text{Gray R} + 0.6057 * \text{Gray G} - 0.8006 * \text{Gray B}) + 128.$$

It should be noted that, based on a model of the Lab color space, it is appropriate to use a positive part of the coordinate axis a to describe a color feature of a banknote of 100 Yuan, a negative part of the coordinate axis a to describe a color feature of a banknote of 50 Yuan, a positive part of the coordinate axis b to describe a color feature of a banknote of 20 Yuan, and a negative part of the coordinate axis b to describe a color feature of a banknote of 10 Yuan. In addition, the method for describing features further includes a relation between component a and component b of the same denomination.

In step 206, a product of Gray a and Gray b, and a difference between the absolute value of Gray a and the absolute value of Gray b are substituted into preset formulas to determine a category of the banknote to be detected.

In the embodiment, assuming that X=IGray al, Y=IGray bl, E=Gray a, and F=Gray b, the preset formulas are respectively as follows.

In preset formula 1, if E*F>0, and X-Y>20, the banknote is determined as a banknote of 100 Yuan Renminbi.

In preset formula 2, if E*F<0, and X-Y>10, the banknote is determined as a banknote of 50 Yuan Renminbi;

In preset formula 3, if E*F>0, and X-Y<5, the banknote is determined as a banknote of 20 Yuan Renminbi; and

In preset formula 4, if E<0, and X-Y<10, the banknote is determined as a banknote of 10 Yuan Renminbi.

In the present embodiment, after the converting with the formulas, feature values of the Renminbi banknotes of different denominations in the Lab space may be as follows:

| denomination | Gray L | Gray a | Gray b |
|---|---|---|---|
| 100 Yuan | 89 | 35 | 7 |
| 50 Yuan | 84 | -26 | 7 |
| 20 Yuan | 77 | 3 | 10 |
| 10 Yuan | 87 | -6 | 0 |

Since the difference among luminosity components Gray L of different denominations is not large, the luminosity components Gray L are not used as a reference for determination. It follows from the above table that, for a banknote of 100 Yuan, the value of Gray a is positive and a larger value of the absolute value (|Gray a|>|Gray b|) indicates a more red color; and for a banknote of 50 Yuan, the value of Gray a is negative and a larger value of the absolute value (|Gray a|>|Gray b|) indicates a more green color. Therefore, a relation among X=IGray al, Y=IGray bl, E=Gray a, and F=Gray b can be used as the determination basis.

In the embodiment, on the basis that the difference among colors of banknotes of different denominations is large, the RGB image of a banknote to be detected is first obtained. Gray values Gray R, Gray G and Gray B of the RGB image in red (R), green (G) and blue (B) wavebands are calculated, and Gray R, Gray G and Gray B are converted into gray values Gray a and Gray b in the Lab color space. The product of Gray a and Gray b and the difference between the absolute value of Gray a and the absolute value of Gray b are substituted into preset formulas to effectively identify the banknotes of different denominations, thereby improving the denomination recognition rate. In addition, |Gray a|, |Gray b|, Gray a, and Gray b are selected as the determination basis, which improves the operational flexibility.

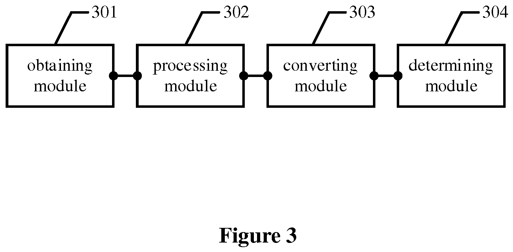

Reference is made to Figure 3. A banknote classification and recognition device based on a Lab color space is provided according to the present disclosure. The device includes an obtaining module 301, a processing module 302, a converting module 303 and a determining module 304.

The obtaining module 301 is configured to obtain an RGB image of a banknote to be detected.

The processing module 302 is configured to calculate gray values Gray R, Gray G and Gray B of the RGB image obtained by the obtaining module in red (R), green (G) and blue (B) wavebands.

The converting module 303 is configured to convert Gray R, Gray G and Gray B calculated by the processing module 302 into gray values Gray a and Gray b in the Lab color space.

The determining module 304 is configured to substitute a product of Gray a and Gray b and the difference between the absolute value of Gray a and the absolute value of Gray b into preset formulas to determine a category of the banknote to be detected.

The determining module 304 may be further configured to:

determine the banknote to be detected as 100 Yuan, in a case that the product of Gray a and Gray b is greater than zero, and the difference between the absolute value of Gray a and the absolute value of Gray b is greater than 20;

determine the banknote to be detected as 20 Yuan, in a case that the product of Gray a and Gray b is greater than zero, and the difference between the absolute value of Gray a and the absolute value of Gray b is less than 5;

determine the banknote to be detected as 50 Yuan, in a case that the product of Gray a and Gray b is less than zero, and the difference between the absolute value of Gray a and the absolute value of Gray b is greater than 10; and

determine the banknote to be detected as 10 Yuan, in a case that Gray a is less than zero, and the difference between the absolute value of Gray a and the absolute value of Gray b is less than 10.

Further, the obtaining module 301 may be configured to obtain the RGB image of a complete region of the banknote to be detected via a multi-spectral recognition device.

Further, the processing module 302 may be configured to extract a region of a head portrait of Mao Zedong in the RGB image as a target region, and calculate the gray values Gray R, Gray G and Gray B based on the target region.

In the embodiment, the converting module 303 is configured to convert Gray R, Gray G and Gray B into the gray values Gray a and Gray b in the Lab color space according to conversion formulas of:

$$Gray\ a = 1.4749 * (0.2213 * Gray\ R - 0.3390 * Gray\ G + 0.1177 * Gray\ B) + 128,$$

and

$$Gray\ b = 0.6245 * (0.1949 * Gray\ R + 0.6057 * Gray\ G - 0.8006 * Gray\ B) + 128.$$

**Claims**

1. A banknote classification and recognition method based on a Lab color space, applied to financial equipment, comprising:

    obtaining (101) an RGB image of a banknote to be detected;
    calculating (102) gray values Gray R, Gray G and Gray B of the RGB image in red (R), green (G) and blue (B) wavebands;
    converting (103, 205) the gray values Gray R, Gray G and Gray B into gray values Gray a and Gray b in the Lab color space; and
    substituting (104, 206) a product of Gray a and Gray b and a difference between the absolute value of Gray a and the absolute value of Gray b into preset formulas to recognize a denomination of the banknote to be detected;
    recognizing a denomination of the banknote to be detected based on results obtained from substituting (104, 206) a product of Gray a and Gray b and a difference between the absolute value of Gray a and the absolute value of Gray b into preset formulas;
    and **characterized in that**:
    the converting (103, 205) Gray R, Gray G and Gray B into the gray values Gray a and Gray b in the Lab color space comprises:
    substituting Gray R, Gray G and Gray B into conversion formulas to obtain Gray a and Gray b, wherein the conversion formulas are:

$$Gray\ a = 1.4749 * (0.2213 * Gray\ R - 0.3390 * Gray\ G + 0.1177 * Gray\ B) + 128,$$

and

$$Gray\ b = 0.6245 * (0.1949 * Gray\ R + 0.6057 * Gray\ G - 0.8006 * Gray\ B) + 128.$$

2. The method according to claim 1, wherein the obtaining (101) the RGB image of the banknote to be detected comprises:

    recognizing (201), by using an edge detection algorithm, a complete region of the banknote to be detected; and
    obtaining (202) the RGB image of the complete region via a multi-spectral recognition device.

3. The method according to claim 2, wherein the calculating (102) the gray values Gray R, Gray G and Gray B of the RGB image in the red (R), green (G) and blue (B) wavebands comprises:

    selecting (203) a region of a head portrait of Mao Zedong in the RGB image as a target region; and
    calculating (204) the gray values Gray R, Gray G and Gray B in the red (R), green (G) and blue (B) wavebands based on the target region.

4. A banknote classification and recognition device based on a Lab color space, applied to financial equipment, comprising:

an obtaining module (301), configured to obtain an RGB image of a banknote to be detected;
a processing module (302), configured to calculate gray values Gray R, Gray G and Gray B of the RGB image obtained by the obtaining module in red (R), green (G) and blue (B) wavebands;
a converting module (303), configured to convert Gray R, Gray G and Gray B calculated by the processing module into gray values Gray a and Gray b in the Lab color space; and
a determining module (304), configured to:

substitute a product of Gray a and Gray b and a difference between the absolute value of Gray a and the absolute value of Gray b into preset formulas to recognize a denomination of the banknote to be detected; and recognize a denomination of the banknote to be detected based on results obtained from substituting a product of Gray a and Gray b and a difference between the absolute value of Gray a and the absolute value of Gray b into preset formulas;

and **characterized in that**:
the converting module (303) is configured to convert the gray values Gray R, Gray G and Gray B into the gray values Gray a and Gray b in the Lab color space according to conversion formulas of:

$$Gray\ a = 1.4749 * (0.2213 * Gray\ R\text{-}0.3390 * Gray\ G + 0.1177 * Gray\ B) +128,$$

and

$$Gray\ b = 0.6245 * (0.1949 * Gray\ R + 0.6057 * Gray\ G - 0.8006 * Gray\ B) + 128.$$

5. The device according to claim 4, wherein the obtaining module (301) is configured to obtain the RGB image of a complete region of the banknote to be detected via a multi-spectral recognition device.

6. The device according to claim 5, wherein the processing module (302) is configured to
extract a region of a head portrait of Mao Zedong in the RGB image as a target region; and
calculate the gray values Gray R, Gray G and Gray B of in the red (R), green (G) and blue (B) wavebands based on the target region.

**Patentansprüche**

1. Ein Banknotenklassifizierungs- und -erkennungsverfahren auf der Grundlage eines Lab-Farbraums, angewandt auf Finanzgeräte, umfassend:

Erhalten (101) eines RGB-Bildes einer zu erkennenden Banknote;
Berechnen (102) der Grauwerte Grau R, Grau G und Grau B des RGB-Bildes in den Wellenbändern Rot (R), Grün (G) und Blau (B);
Umwandeln (103, 205) der Grauwerte Grau R, Grau G und Grau B in die Grauwerte Grau a und Grau b im Lab-Farbraum; und
Ersetzen (104, 206) eines Produkts aus Grau a und Grau b und einer Differenz zwischen dem Absolutwert von Grau a und dem Absolutwert von Grau b in voreingestellte Formeln, um einen Nennwert der zu erkennenden Banknote zu erkennen;
Erkennen eines Nennwertes der zu erkennenden Banknote auf der Grundlage der Ergebnisse, die sich aus dem Ersetzen (104, 206) eines Produkts von Grau a und Grau b und einer Differenz zwischen dem Absolutwert von Grau a und dem Absolutwert von Grau b in voreingestellten Formeln ergeben;
und **dadurch gekennzeichnet, dass**:
das Umwandeln (103, 205) von Grau R, Grau G und Grau B in die Grauwerte Grau a und Grau b im Lab-Farbraum umfasst:
Substituieren von Grau R, Grau G und Grau B in Umwandlungsformeln, um Grau a und Grau b zu erhalten, wobei die Umwandlungsformeln sind:

$$\text{Grau a} = 1{,}4749 * (0{,}2213 * \text{Grau R} - 0{,}3390 * \text{Grau G} + 0{,}1177 * \text{Grau B}) + 128,$$

und

$$\text{Grau b} = 0{,}6245 * (0{,}1949 * \text{Grau R} + 0{,}6057 * \text{Grau G} - 0{,}8006 * \text{Grau B}) + 128.$$

2. Verfahren nach Anspruch 1, wobei das Erhalten (101) des RGB-Bildes der zu erfassenden Banknote umfasst:

Erkennen (201) eines vollständigen Bereichs der zu erkennenden Banknote mit Hilfe eines Kantenerkennungsalgorithmus; und
Erhalten (202) des RGB-Bildes des gesamten Bereichs über ein multispektrales Erkennungsgerät.

3. Verfahren nach Anspruch 2, wobei das Berechnen (102) der Grauwerte Grau R, Grau G und Grau B des RGB-Bildes in den Wellenbändern Rot (R), Grün (G) und Blau (B) umfasst:

Auswählen (203) eines Bereichs eines Kopfporträts von Mao Zedong in dem RGB-Bild als Zielbereich; und
Berechnen (204) der Grauwerte Grau R, Grau G und Grau B in den Wellenbändern Rot (R), Grün (G) und Blau (B) auf der Grundlage des Zielbereichs.

4. Eine Vorrichtung zum Klassifizieren und Erkennen von Banknoten, basierend auf einem Lab-Farbraum und für die Anwendung auf Finanzgeräte, umfassend:

ein Erfassungsmodul (301), das so konfiguriert ist, dass es ein RGB-Bild einer zu erfassenden Banknote erhält;
ein Verarbeitungsmodul (302), das so konfiguriert ist, dass es Grauwerte Grau R, Grau G und Grau B des RGB-Bildes berechnet, das durch das Erfassungsmodul in den Wellenbändern Rot (R), Grün (G) und Blau (B) erhalten wird;
ein Konvertierungsmodul (303), das so konfiguriert ist, dass es Grau R, Grau G und Grau B, die vom Verarbeitungsmodul berechnet wurden, in Grauwerte Grau a und Grau b im Lab-Farbraum konvertiert; und
ein Bestimmungsmodul (304), konfiguriert dazu:

ein Produkt aus Grau a und Grau b und einer Differenz zwischen dem Absolutwert von Grau a und dem Absolutwert von Grau b in voreingestellten Formeln zu ersetzen, um einen Nennwert der zu erkennenden Banknote zu erkennen; und
einen Nennwert der zu erkennenden Banknote auf der Grundlage der Ergebnisse zu erkennen, die sich aus dem Ersetzen eines Produkts aus Grau a und Grau b und einer Differenz zwischen dem Absolutwert von Grau a und dem Absolutwert von Grau b in voreingestellten Formeln ergeben;

und **dadurch gekennzeichnet, dass**:
das Konvertierungsmodul (303) so konfiguriert ist, dass es die Grauwerte Grau R, Grau G und Grau B in die Grauwerte Grau a und Grau b im Lab-Farbraum gemäß den folgenden Konvertierungsformeln umwandelt:

$$\text{Grau a} = 1{,}4749 * (0{,}2213 * \text{Grau R} - 0{,}3390 * \text{Grau G} + 0{,}1177 * \text{Grau B}) + 128,$$

und

$$\text{Grau b} = 0{,}6245 * (0{,}1949 * \text{Grau R} + 0{,}6057 * \text{Grau G} - 0{,}8006 * \text{Grau B}) + 128.$$

5. Vorrichtung nach Anspruch 4, wobei das Erfassungsmodul (301) so konfiguriert ist, dass es über eine multispektrale Erkennungsvorrichtung das RGB-Bild eines vollständigen Bereichs der zu erkennenden Banknote erhält.

6. Vorrichtung nach Anspruch 5, wobei das Verarbeitungsmodul (302) so konfiguriert ist, dass es
einen Bereich eines Kopfportraits von Mao Zedong in dem RGB-Bild als einen Zielbereich extrahiert; und
die Grauwerte Grau R, Grau G und Grau B im roten (R), grünen (G) und blauen (B) Wellenband basierend auf dem Zielbereich berechnet.

**Revendications**

1. Une méthode de classification et de reconnaissance des billets de banque basée sur un espace de couleur Lab, appliquée aux équipements financiers, comprenant:

   obtenir (101) une image RVB d'un billet de banque à détecter;
   calcul (102) des valeurs de gris Gris R, Gris V et Gris B de l'image RVB dans les bandes d'ondes rouge (R), verte (V) et bleue (B);
   convertir (103, 205) des valeurs de gris Gris R, Gris V et Gris B en valeurs de gris Gris a et Gris b dans l'espace couleur Lab; et
   substituant (104, 206) un produit du Gris a et du Gris b et une différence entre la valeur absolue du Gris a et la valeur absolue du Gris b dans des formules prédéfinies pour reconnaître une valeur nominative du billet à détecter;
   reconnaître une valeur nominative du billet à détecter sur la base des résultats obtenus en substituant (104, 206) un produit de Gris a et de Gris b et une différence entre la valeur absolue de Gris a et la valeur absolue de Gris b dans des formules prédéfinies;
   et caractérisé en cela:
   la conversion (103, 205) de Gris R, Gris V et Gris B en valeurs de gris Gris a et Gris b dans l'espace couleur Lab comprend:
   en substituant Gris R, Gris V et Gris B dans les formules de conversion pour obtenir Gris a et Gris b, où les formules de conversion sont

$$\text{Gris a} = 1{,}4749 * (0{,}2213 * \text{Gris R} - 0{,}3390 * \text{Gris V} + 0{,}1177 * \text{Gris B}) + 128,$$

   et

$$\text{Gris b} = 0{,}6245 * (0{,}1949 * \text{Gris R} + 0{,}6057 * \text{Gris V} - 0{,}8006 * \text{Gris B}) + 128.$$

2. La méthode selon la revendication 1, dans laquelle l'obtention (101) de l'image RVB du billet à détecter comprend:

   reconnaître (201), en utilisant un algorithme de détection des bords, une région complète du billet à détecter; et
   obtenir (202) l'image RVB de la région complète via un dispositif de reconnaissance multispectrale.

3. La méthode selon la revendication 2, dans laquelle le calcul (102) des valeurs de gris Gris R, Gris V et Gris B de l'image RVB dans les bandes d'ondes rouge (R), verte (V) et bleue (B) comprend:

   en sélectionnant (203) une région d'un portrait de tête de Mao Zedong dans l'image RVB comme région cible;
   calcul (204) des valeurs de gris Gris R, Gris V et Gris B dans les bandes d'ondes rouge (R), verte (V) et bleue (B) en fonction de la région cible.

4. Un dispositif de classification et de reconnaissance des billets de banque basé sur un espace de couleur Lab, appliqué aux équipements financiers, comprenant:

   un module d'obtention (301), configuré pour obtenir une image RVB d'un billet de banque à détecter;
   un module de calcul (302), configuré pour calculer les valeurs de gris Gris R, Gris V et Gris B de l'image RVB obtenue par le module d'obtention dans les bandes d'onde rouge (R), verte (V) et bleue (B);
   un module de conversion (303), configuré pour convertir le Gris R, le Gris V et le Gris B calculés par le module de calcul en valeurs de gris Gris a et Gris b dans l'espace couleur Lab;
   un module de détermination (304), configuré pour:

      substituer un produit de Gris a et Gris b et une différence entre la valeur absolue de Gris a et la valeur absolue de Gris b dans des formules préétablies pour reconnaître une coupure du billet à détecter;

reconnaître une coupure du billet à détecter sur la base des résultats obtenus en substituant un produit du Gris a et du Gris b et une différence entre la valeur absolue du Gris a et la valeur absolue du Gris b dans des formules prédéfinies;

et caractérisé en cela:
le module de conversion (303) est configuré pour convertir les valeurs de gris Gris R, Gris V et Gris B en valeurs de gris Gris a et Gris b dans l'espace couleur Lab selon les formules de conversion de

$$Gris\ a = 1{,}4749 * (0{,}2213 * Gris\ R - 0{,}3390 * Gris\ V + 0{,}1177 * Gris\ B) + 128,$$

et

$$Gris\ b = 0{,}6245 * (0{,}1949 * Gris\ R + 0{,}6057 * Gris\ V - 0{,}8006 * Gris\ B) + 128.$$

5. Le dispositif selon la revendication 4, dans lequel le module d'obtention (301) est configuré pour obtenir l'image RVB d'une région complète du billet de banque à détecter via un dispositif de reconnaissance multispectrale.

6. Le dispositif selon la revendication 5, dans lequel le module de calcul (302) est configuré pour
extraire une région d'un portrait de tête de Mao Zedong dans l'image RVB comme région cible;
calculer les valeurs de gris Gris R, Gris V et Gris B des bandes d'ondes rouge (R), verte (V) et bleue (B) en fonction de la région cible.

```
┌─────────────────────────────────────────────────────────┐ ┌─101
│    obtain an RGB image of a banknote to be detected       │
└─────────────────────────────────────────────────────────┘
                            │
                            ▼
┌─────────────────────────────────────────────────────────┐ ┌─102
│  calculate gray values Gray R, Gray G and Gray B of the   │
│  RGB image in red (R), green (G) and blue (B) wavebands    │
└─────────────────────────────────────────────────────────┘
                            │
                            ▼
┌─────────────────────────────────────────────────────────┐ ┌─103
│  convert Gray R, Gray G and Gray B into gray values Gray  │
│      a and Gray b in the Lab color space                  │
└─────────────────────────────────────────────────────────┘
                            │
                            ▼
┌─────────────────────────────────────────────────────────┐ ┌─104
│  substitute a product of Gray a and Gray b and a difference│
│  between the absolute value of Gray a and the absolute     │
│  value of Gray b into preset formulas to determine a       │
│  category of the banknote to be detected                  │
└─────────────────────────────────────────────────────────┘
```

**Figure 1**

```
┌─────────────────────────────────────────────┐  ┌─ 201
│  extract a complete region of a banknote to be detected  │ ╱
└─────────────────────────────────────────────┘
                        │
                        ▼
┌─────────────────────────────────────────────┐  ┌─ 202
│  obtain an RGB image of the complete region via a multi-  │ ╱
│           spectral recognition device            │
└─────────────────────────────────────────────┘
                        │
                        ▼
┌─────────────────────────────────────────────┐  ┌─ 203
│  select a region of a head portrait of Mao Zedong in the │ ╱
│           RGB image as a target region           │
└─────────────────────────────────────────────┘
                        │
                        ▼
┌─────────────────────────────────────────────┐  ┌─ 204
│  calculate gray values Gray R, Gray G and Gray B in red  │ ╱
│    (R), green (G) and blue (B) wavebands based on the    │
│                  target region                   │
└─────────────────────────────────────────────┘
                        │
                        ▼
┌─────────────────────────────────────────────┐  ┌─ 205
│  convert Gray R, Gray G and Gray B into gray values      │ ╱
│      Gray a and Gray b in the Lab color space          │
└─────────────────────────────────────────────┘
                        │
                        ▼
┌─────────────────────────────────────────────┐  ┌─ 206
│    substitute a product of Gray a and Gray b and a       │ ╱
│  difference between the absolute value of Gray a and the │
│    absolute value of Gray b into preset formulas to      │
│   determine a category of the banknote to be detected    │
└─────────────────────────────────────────────┘
```

**Figure 2**

┌─────────── 301 ┌─────────── 302 ┌─────────── 303 ┌─────────── 304

| obtaining module | processing module | converting module | determining module |

**Figure 3**

**EP 3 249 618 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510033336
- WO 2011082793 A1